# EUROPEAN PATENT APPLICATION

(11) **EP 2 397 509 A1**
(43) Date of publication of application: **21.12.2011**
(21) Application number: 10006329.6
(22) Date of filing: 18.06.2010
(51) Int. Cl.: C08G 61/04

(54) **Functionalized materials by catalyzed carbene copolymerization**

(71) Applicant: Stichting Dutch Polymer Institute, 5612 AB Eindhoven (NL); Universiteit van Amsterdam, 1012 WX Amsterdam (NL)
(72) Inventor: The designation of the inventor has not yet been filed
(74) Representative: Renkema, Jaap

(57) **Abstract**

The present invention relates to a copolymer having the general formula:

(̵CHR¹)̵ₙ Formula 1

wherein the copolymer comprises a chain of n carbon atoms, each carbon atom bearing a R¹ group, each R¹ group being independently selected from the group consisting of:
-H and hydrocarbyl-groups having between 1 and 50 carbon atoms and optionally one or more hetero atoms, and wherein the copolymer comprises at least two different R¹ groups, and wherein n is an integer ranging from 50 to 1000000.

The present invention also relates to a method for preparing such copolymers.

## Description

The present invention relates to new stereoregular homo- and copolymers prepared from functionalized diazo compounds.

The present invention also relates to new methods for the synthesis of functional polymers and polymeric devices. Such methods use "carbene (co)polymerlzatlon" (or C1 (co)polymerlzetlon) techniques.

While olefin polymerization (C2-polymerization) Is currently the most important method to prepare polymeric material, It also has important limitations with respect to the synthesis of functionalized materials with a defined microstructure. Future generations of convenient and light-weight (specialty) polymeric materials and devices, such as polymeric organic LEDs, light harvesting polymers, plastic batteries, conducting polymers and other advanced 'plastic electronic components' will require the controlled and stereospecific (co)polymerizatlon of monomers containing complex functionalities (e.g. fluorescent or phosphorescent 'energy transporting' dyes, stable organic radicals or metal complexes, and electron transporting and/or storing functionarties). While such new materials and polymeric devices are desirable for numerous reasons, they are exceedingly difficult to prepare with all currently available C2-polymerization techniques. Hence, new polymerization techniques and developments to expand our synthetic toolbox In polymer synthesis are highly welcome.

It is an object of the present invention to provide polymers and copolymers having novel functionalities, making them suitable for the above mentioned applications,

It is another object of the present Invention to provide a method for preparing such polymers and copolymers

These objects are at least partly achieved by providing copolymers having the general formula:

(CHR¹)ₙ Formula 1 Formula 1

wherein the copolymer comprises a chain of n carbon atoms, each carbon atom bearing a R¹ group, each R¹ group being Independently selected from the group consisting of;
- H and hydrocarbyl-groups having between 1 and 50 carbon atoms and optionally one or more hetero atoms, and wherein the copolymer comprises at least two different R¹ groups, and wherein n is an integer ranging from 50 to 1000000..

In one embodiment, the copolymer according to the present Invention has a main chain of n carbon atoms comprising at least one section having the general formula:

(-CHR²-)ₚ(-CHR³-)_{q} Formula 2 Formula 2

wherein R² and R³ are different and independently of one another selected from the group consisting of:
-H and hydrocarbyl-groups having between 1 and 50 carbon atoms and optionally one or more hetero atoms,
wherein
- n is an integer ranging from 50 to 1000000;
- p and q are integers which are independent of one another and range from 1 to 100000

In an embodiment, the hydrocarbyl-groups may be selected from the group consisting of alkanes, vinyls (alkenes), aryls (aromatic functionalities), ketones, ethers, amines, esters, amides, preferably esters are selected

In a preferred embodiment, the hydrocarbyl-groups comprise esters having the following general structure: ...C(=O)-O-R⁴. The Regroups comprise hydrocarbyl-groups having between 1 and 20 carbon atoms

In an embodiment the R⁴ groups of the copolymer according to the present invention comprise hydrocarbyl-groups having between 2 and 10 carbon atoms.

In an embodiment n ranges from 500-100000, preferably between 750 and 10000, more preferably between 1000 and 5000.

In an embodiment the R⁴-groups of the copolymer according to the present Invention comprise linear or branched aliphatic hydrocarbyl groups optionally substituted with hetero atoms or aromatic hydrocarbyl groups.

In an embodiment the Regroups of the copolymer according to the present Invention may independently of one another be selected from the group consisting of: ethyl (-C₂H₆) , two butyl (-C(CH₃)₃) and benzyl (-CH₂-Ø),

In an embodiment, the copolymer according to the present Invention may be a random copolymer.

in an embodiment, the copolymer according to the present invention may be a statistical copolymer.

In an embodiment, the copolymer according to the present Invention may be a block copolymer or a gradient block copolymer.

The properties in a gradient block copolymer, e.g. solubility in polar solvents, may gradually change over the length of the polymer chain. Such polymers may have compatibilizing properties, in case of the example (solubility In polar solvents), the polymer may have emulsifying properties.

In an embodiment the copolymer according to the present invention may be syndiotactic. Such a copolymer may have an increased crystallinity, which may be advantageous for certain applications, e.g. applications where impact resistance and/or shape persistence is Important. Various important polymer properties are influenced by the (degree of) crystallinity, such as stiffness, tensile strength, hardness, modulus, (maximum) application temperature and melt processing behavior.

In an embodiment, the copolymer according to Formula 1, comprises a first fraction of the R¹-groups being -H and a second fraction of the R¹-groups being a -C(=O)-O-R⁴ group, wherein R⁴ comprise hydrocarbyl-groups having between 1 and 20 carbon atoms, preferably between 2 and 10 carbon atoms.

In a further embodiment the Regroups may be selected from the group consisting of: ethyl (-C₂H₆), t-butyl (-C(CH₃)₃) and benzyl (CH₂-Ø), preferably ethyl is selected as Regroup. In an embodiment, the copolymer according to Formula 2, comprises R 2-groups being -H and Regroups being a -C(=O)-O-R⁴ group, wherein R⁴ comprise hydrocarbyl-groups having between 1 and 20 carbon atoms, preferably between 2 and 10 carbon atoms.

In a further embodiment the R⁴-groups may be selected from the group consisting of: ethyl (-C₂H₆) , t-butyl (-C(CH₃)₃) and benzyl (-CH₂-Ø), preferably ethyl is selected as R⁴-group. An advantage of the Incorporation of diazomethane In the copolymer according to this embodiment (wherein a first fraction of the R¹ groups or the R 2-groups comprise -H) is that the flexibility of the chain of the copolymer may be increased.
Copofymers bearing ester functionalities on every carbon atom are expected to be relatively rigid, Incorporation of varying amounts of non-functionallzed monomers may lead to decreased rigidity and thus Increased flexibility of the polymers, while still having the benefits of polar side groups. This Is also expected to be beneficial for (melt)processing the polymers. Incorporation of non-functlonallzed monomers makes the environment around the ester functionality less crowded, and therefore post-modification of the copolymers of functionalized and non-funotlonallzed monomers may be easier.

ln an embodiment, the copolymer according to Formula 1 comprises two different R¹-groups selected from ethyl acetate (-C(=O)-O-C₂H₅), t-butyl acetate (-C(=O)-0-C(CH₃)₃) and benzyl acetate (-C(=O)-O-CH₂-Ø).

In an embodiment, the copolymer according to Formula 2 comprises R²-groups selected from the group consisting of ethyl acetate (-C(=O)-O-C₂H₅), t-butyl acetate (-C(=O)-O-C(CH₃)₃) and benzyl acetate (-C(=O)-O-CH₂-Ø) and Regroups, different from R² groups, selected from the group consisting of ethyl acetate (-C(=O)-O-C₂H₅), t-butyl acetate (-C(=O)-O-C(CH₃)) and benzyl acetate (-C(=O)-O-CH₂-Ø).

The copolymers according to the present invention in all its embodiments have the advantage that the polymer properties may be tuned.

Linear polymers with tunable amounts of ester side functionalities may be obtained by Rh catalyzed copolymerization of functionalized and non-functionalized carbenes. Varying the monomer ratio offers a way to tune the amount of polar functionalities in the copolymer, and thereby the polymer properties as solubility in common laboratory solvents (e.g. dichloromethane (DCM)) and thermal behavior. The copolymers may have a blocky microstructure and the unique properties of the 'ester blocks' may be retained.

The present invention further relates to a method for preparing a copolymer according to the present invention as described above, the method comprises the sequential steps of:
a) providing a first monomer and a second monomer, both monomers having the general formula N₂=CH-R⁶, wherein R⁶ Is selected from the group consisting of: - H and hydrocarbyl-groups having between 1 and 50 carbon atoms and optionally one or more hetero atoms;
b) providing a Rh-complex catalyst solution;
c) mixing the first monomer and the Rh-complex catalyst solution;
d) stirring the obtained mixture and allowing the first monomer to react at least partially;
e) adding the second monomer to the obtained mixture:
f) stirring the obtained mixture and allowing the monomers to react; and
g) optionally isolating the obtained polymer.

Examples of hydrocarbyl-groups (R⁶) are alkanes, vinyls (alkenes), aryls (aromatic functionalities), ketones, ethers, amines, esters and amides.

Preferably, the hydrocarbyl-groups comprise esters having the following general structure: -C(=O)-O-R⁴. The Regroups comprise hydrocarbyl-groups having between 1 and 20 carbon atoms, preferably between 2 and 10 atoms. Examples of Regroups are linear or branched aliphatic hydrocarbyl groups optionally substituted with hetero atoms or aromatic hydrocarbyl groups. Preferred examples of the R"groups are ethyl (-C₂H₆), t" butyl (-C(CH₃)₃) and benzyl (-CH₂-Ø).

Step d) may be carried out for between 0 and 300 minutes at a temperature which may range between 0°C and 0°C.

Step f) may be carried out for between 1 and 20 hours at a temperature which may range between 0°C and 0°C.

Step g) may consist of working up the obtained polymer by sequentially washing the polymer with a solvent and removing the solvent by vacuum processing.

In an embodiment, the first monomer and the second monomer are different and independently of one another selected from the group consisting of ethyl diazoacetate (EDA), t-butyl diazoacetate (tBuDA) benzyl diazoacetate (BnDA) and diazomethane (DM).

In an embodiment, the first monomer comprises a diazoester, preferably selected from the group consisting of ethyl diazoacetate (EDA), t-butyl diazoacetate (tBuDA) and benzyl diazoacetate (BnDA), more preferably ethyl diazoacetate (N₂=CH-C(=O)-O-C₂H₆) is selected. The second monomer is diazomethane (N₂=CH₂) .

In an embodiment, the second monomer is added in portions in step e) while stirring the mixture, allowing the monomers to react;

In an embodiment, the first monomer and the second monomer are simultaneously mixed with the Rh catalyst solution (i.e. step d) Is performed for 0 minutes). With the process of this embodiment a random copolymer of the first and the second monomer may be prepared.

However, If there Is a large difference in reactivity between or among the monomers which are used in this embodiment of the present Invention, one of the monomers, say monomer X, may preferentially react and thus forming a copolymer section which will be rich In X. As the reaction proceeds and no addition of reactants occurs, the concentration of monomer X in the reacting mixture will decrease, which may enhance the chance of a less reactive monomer, say monomer Y, to be incorporated In the copolymer chain. So, gradually the copolymer will become richer in Y.

In conclusion, by mixing the first and the second monomer having a large difference in reactivity simultaneously with the Rh-complex catalyst solution may lead to a gradient copolymer. However, mixing monomers having similar or equal reactivities simultaneously with the Rh-complex catalyst solution may lead to a random copolymer,

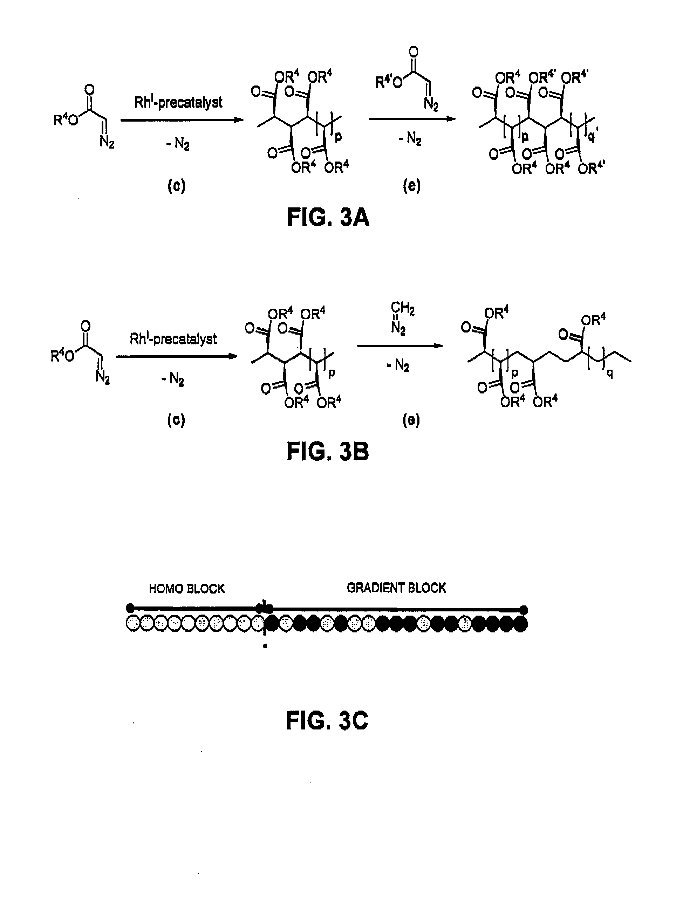

In an embodiment, step d is performed for between 2 minutes and 240 minutes, preferably between 5- minutes and 180 minutes, more preferably between 7 and 120 minutes, even more preferably for 10-60 minutes and at a temperature of between 5°C and 65°C, preferably between 10°C and 60°C, more preferably between 15°C and 55°C. With the process according to this embodiment, a gradient block copolymer according to the present invention may be prepared. The gradient block copolymer comprises a homo-block and a gradient block (see also Fig. 3C). The length of the homo-block (homo-polymerization of the first monomer) may be determined by the duration of step d. The composition of the gradient block may be determined by the composition of the reaction mixture as a function of time.

At equal concentrations of the first monomer and the second monomer and comparable reactivities of both monomers, a random copolymer block may be formed.

In an embodiment, the second monomer may be gradually added in portions in step e, e.g, dropwise adding while stirring the reaction mixture of the second monomer during between 5 minutes and 60 minutes, preferably between 90 minutes and 60 minutes, more preferably between 15 minutes and 40 minutes, The effect of this may be that a gradient block may be formed, At the start of step e, the concentration of the first monomer In the reacting mixture exceeds the concentration of the second monomer, which leads to a 'first monomer rich' copolymer section. As the time progresses, the concentration of the second monomer in the reaction mixture may Increase, which may lead to the formation of 'second monomer rich' copolymer sections. In other words, the composition of the gradient block gradually changes from 'first monomer rich' to 'second monomer rich'. In this embodiment also the effect of a difference In reactivity between or among the monomers as described above may influence the composition of the formed copolymer and therefore has to be taken Into account.

In a further embodiment, second monomer continues to be added after the first monomer has been completely reacted. With the process of this further embodiment, a homo-block of the second monomer may be formed.

In an embodiment, the catalyst used in the method according to the present invention comprises a Rh-complex catalyst comprising a cyclic diene ligand, preferably having between 5 and 12 carbon atoms in the ring.

Examples of the cyclic diene ligand are 1,5-cyclooctadiene; 1 ,5-dimethyl-1 ,5.. cyclooctadiene; dicyclopentadiene; 1,6-diphanyl-1,5-cyclooctadiene; norbornadiene; 1,5-di(p-MeO-phenyl)-1,5-cyclooctadiene. In an embodiment, the catalyst used in the method according to the present Invention comprises a Rh-complex catalyst comprising an anionic electron-donating ligand comprising N and/or 0 donor atoms, or deprotonated α-amino acid ligand.

Examples of anionic electron-donating ligands comprising N and/or 0 donor atoms or deprotonated a-amino acid ligands are picolinate, acetate, quinolinate, glycinate and prolinate.

In a preferred embodiment, the catalyst used in the method according to the present invention is selected from the group consisting of [(L-prollnate)Rh'(1,5-cyclooctadiene)] and [(L-prolinate)Rh'(1,5-dlmethyl-1,5.cyclooctadiene)], Preferably [(L-prolinate)Rh'(1,5-dlmethyl-1,5-cyclooctadiene)] is selected as catalyst complex, because it offers higher copolymerization yields (i.e. the yield obtained with [(L-prolinate)Rh(1,5-cyclooctadiene)] are up to 50'/o and with [(L-prolinate)Rh'(1,5-dimethyl-1,5-cyclooctadiene)] up to 80%.

The methods according to all embodiments of the present invention offer valuable alternative synthetic methods for the synthesis of new materials that are not easily accessible by the more common polymerization of C=C double bonds.

The methods according to the present invention enable Rh-mediated carbene polymerization using different diazoesters (N₂=CH-C(=O)-O-R⁴), which allows the preparation of fully functionalized, high-mass and highly stereo regular (syndiotactic) carbon-chain polymers, in good yields.

The Invention will now be explained into more detail with reference to the following Figures:
Fig. 1: Schematic representation of the synthesis of catalyst precursors 1 and 2 used in the process of the present invention;
Fig. 2A: Schematic representation of the carbene precursors: ethyl diazoacetate (EDA). 3; benzyl diazoacetate (BnDA), 4; t-butyl diazoacetate (tBuDA), 5; and diazomethane (DM), 6.
Fig. 2B: Schematic representation of the carbene precursors: ethyl diazoacetate (EDA), 3; benzyl diazoacetate (BnDA), 4; t-butyl diazoacetate (tBuDA), 6; and diazomethane (DM), 6:¹H NMR Proton numbering scheme;
Fig. 2C: Schematic representation of the carbene precursors: ethyl diazoacetate (EDA), 3; benzyl diazoacetate (BnDA), 4; t-butyl diazoacetate (tBuDA), 5; and diazomethane (DM), 6: ¹³C NMR Carbon numbering scheme;
Fig. 3A: Schematic representation of a gradient block copolymerization of carbenes from diazoesters by addition of the second dlazoester after addition of the first diazoester;
Fig. 3B: Schematic representation of a gradient block copolymerization of carbenes from diazoesters and diazomethane by addition of diazomethane after addition of the diazoester;
Fig. 3C: Schematic representation of a gradient block copolymer
Fig. 4. Part of the ¹H NMR spectra (500 MHz, CDCl₃, 298 K) of homo and copolymers of EDA and BnDA: a) mixture of poly(EA) and poly(BnA); b) poly(EA-grad-BnA), EA : BnA = 1 : 1.4; c) poly(EA-grad-BnA), EA BnA = 1 : 0,5; d) poly(EA-ran-8nA), EA : BnA =1: 0.8
Fig. 5. Part of the ¹³C NMR spectra (125 MHz, CDCl₃, 298 K) of homo and copolymers of EDA and BnDA: a) mixture of poly(EA) and poly(BnA); b) poly(EA-grad-BnA), EA ; BnA = 1 : 1,4; c) poly(EA-grad-BnA), EA: BnA =1 : 0.5; d) poly(EA-ran-BnA), EA : BnA =1: 0.8
Fig. 6. Schematic representation of copolymer chain interactions.
Fig. 7. Schematic representation of the intercalation of the polymer chain(s)

### Measurement techniques

### Nuclear Magnetic Resonance spectroscopy (NMR)

NMR spectroscopy experiments are carried out on a Varian Inova 500 spectrometer (500 MHz and 125 MHz for'H and 1³C , respectively); a Bruker ARX 400 spectrometer (400 and 100 MHz for ¹H and ¹³C, respectively) or a Varian Mercury 300 spectrometer (300 MHz and 75 MHz for ¹H and ¹³C, respectively). Solvent shift reference used for ¹H NMR spectroscopy: CDCl₃: δ_{H} = 7.26 ppm. For ¹³C NMR spectroscopy: CDCl₃; δ_{c} = 77.0 ppm. Copolymers containing diazomethane monomers are also analyzed in 1,2-C₆D₄Cl₂ (solvent shift reference used for¹H NMR: δ_{H} = 7,0 and 7.3 ppm; for 13C NMR: δ_{c} = 133, 130 and 127 ppm) at temperatures up to 120 °C.

### Solid State NMR spectroscopy

Solid State NMR 13C CP MAS NMR spectra were measured on a Chemagnetics 300 MHz spectrometer with a Bruker 2.5 mm MAS probe tuned to a resonance frequency for ¹³C of 75.480 MHz and 300.149 MHz for ¹H. Magic angle spinning was between 5.3 and 6.4 kHz while the number of acquisitions ranged from 3750 to 8192. Protons were decoupled during 30 ms of acquisition with an rf-field strength of 120 kHz and a CM decoupling sequence which was optimized on glycine (8.4 µs pulses and 3° modulation amplitude). Cross polarization was performed with a 1 ms contact time with an rf field of 71 kHz and a 2% ramp for ¹H and 66 kHz for ¹³C. Chemical shifts were referenced eternally using the CH₂ resonance of solid adamantane (δ=38.48 ppm).

### Solid state IR measurements

iR solid state measurements were performed on a Shimadzu FTIR 8400S spectrometer equipped with a Specac MKll Golden Gate Single Reflection ATR system.

### Size Exclusion Chromatography (SEC)

Molecular weight distributions were measured using size-exclusion chromatography (SEC) on a Shlmadzu LC-20AD system with two PLgel 5µm MIXED-C (300 mm x 7.5 mm) columns (Polymer Laboratories) in series and a Shimadzu RID-10A refractive-index detector, using dichloromethane as mobile phase at 1 mL/min and T = 35°C.

Polystyrene standards In the range of 760-1,880,000 g/mol (Sigma-Aldrich) were used for calibration.

### Thermo Gravimetric Analysis (TGA)

Thermo gravimetric experiments are executed with a Perkin Elmer TGA7 with a heating rate of 10°Clmin under a nitrogen atmosphere.

### Differential Scanning Calorimetry (DSC)

### Copolymers of dlazoesters only:

Differential scanning calorimetry is performed using a DSC Q1000 (TA-Instruments) in the modulated mode. The heating rate is 1 °Clmln, the amplitude of temperature modulation is 0.5°C and the period of modulation 60 s. Melting temperatures Tₘ and crystallization temperatures T_{c} are determined from the heat flow curves, while glass transition temperatures Tg were derived from the reversing heat flow curves. For the determination of Tg of poly(EA) a cooling rate of 2°Clmin modulated is used. All data were gathered by running the heating-cooling sequences twice, using the data from the second run.

### Diazomethane homopolymers and copolymers of diazomethane and diazoesters:

Differential scanning calorimetry is performed using a Jade DSC (Perkin Elmer). The heating rate is 10°C/min and melting temperatures Tₘ and crystallization temperatures T_{c} are determined from the heat flow curves. All data were gathered by running the heating-cooling sequences twice, using the data from the second run.

### Materials

### Experiment 1: preparation of catalyst precursors.

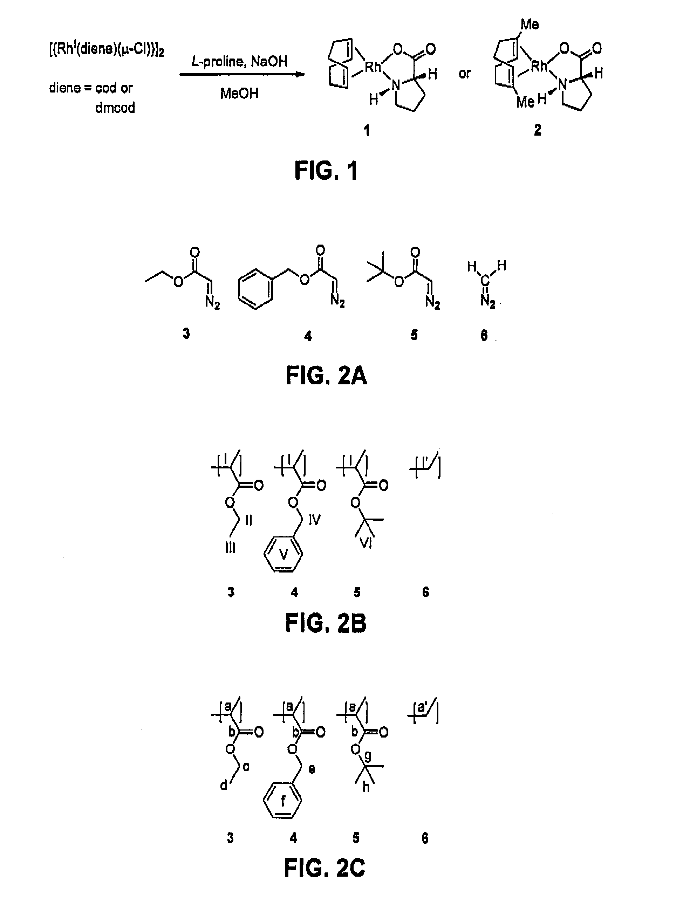

[(L-prolinate)Rh'(1,5-cyclooctadlene)] and [(L-prolinate)Rh'(1 ,5-dlmethyl-1 ,5. cyclooctadiene)], i.e. complexes 1 and 2 shown in Fig. 1 are easily prepared by reacting the corresponding [{Rh¹(diene)(µ-Cl)}]₂ (the diene is 1,6-cyclooctadiene (cod) for complex 1 and 1,5-dimethyl-1,5-cyclooctadlene (dmcod) for complex 2) with deprotonated L-proline (with the aid of a strong base, e.g. NaOH In scheme 1 Fig. 1) in methanol at room temperature, see the scheme in Fig. 1.

Complex 2 was stored for several days in air prior to Its use in the polymerization reactions in order to obtain higher polymer yields.

### Experiment 2: preparation of diazomethane.

Diazomethane was generated by hydrolysis of a solution of N-methyl-N-nitrosourea in ice cooled dichloromethane (l7CM) or ether with aqueous base (KOH). Because diazomethane cannot be isolated (it is handled in solution), the exact amount of diazomethane in the non-aqueous layer was determined by addition of excess benzoic acid and back titration with KOH.

### Availability and or preparation of diazoesters:

The substrates were ethyl diazoacetate (EDA); a diazoester with an aromatic substituent: benzyl diazoacetate (BnDA) and one with a sterically demanding side group: t-butyl diazoacetate (tBuDA) (see Fig 2). EDA and tBuDA are commercially available, e.g. from Sigma-Aldrich and BnDA was prepared in two steps from benzylalcohol and glycine by procedures known in the art, see e.g. Patel, R. P. et al., J. Org. Chem. 1965, 30, 3575-3576 or Myhre, P. C., et al., J. Org. Chem. 1990, 55, 3417-3421. In the first step benzylalcohol and glycine are in the presence of SOCI₂ at 110°C converted to glycine benzyl ester hydrochloride (sea , R. P. et al., J. Org. Chem. 1985), which is converted to BnDA In a second step by reaction with NaN0₂ and H₂S0₄ in a two-phase solvent mixture of DCM and water at -10°C (see Myhre, P. C., et al., Org, Chem. 1990, 55, 3417-3421).

### Examples of (co)polymerlzatlon reactions

The reaction follows a migratory carbene insertion chain propagation mechanism which Is shown in the scheme of Fig. 3A, and the high syndio-specificity is most likely determined by chain-end control. Fig. 3B shows a similar copolymerization scheme, wherein the second monomer is diazomethane. Both Fig. 3A and 3B show that first a homo-block of a diazoester with R⁴ groups may be formed (step (c) in both cases). R⁴ has the same meaning as discussed earlier. In a second stage (step (e) in both cases) either the second diazoester with R⁴'-groups (Fig. 3A) or diazomethane (Fig. 3B) is added, R⁴'-groups are different from R⁴, but R⁴' has similar meaning as R⁴ as previously described,

### Comparative Example A-F., Homopolymerization of Different Diazoesters.

The behavior of catalyst precursors 1 and 2 (see Fig. 1) were investigated in the homopolymerization of different diazoesters.

The homopolymerization reactions were performed by addition of 50 molar equivalents of diazoester to a solution of catalyst precursor 1 or 2 in chloroform. In these particular examples, 2 mmol of diazoester was added to a solution of 0.04 mmol of catalyst precursor (1 or 2) in 5 mL of chloroform (solvent). The solution was stirred for 14 hours at room temperature. The polymer was obtained by evaporation of the solvent and subsequent precipitation with methanol. After washing with methanol and drying, a white solid was obtained.

Carbenes from EDA and BnDA were polymerized to poly(ethyl 2"y!idene-acetate) (poly(EA)) and poly(benzyl 2-ylidene-acetate) (poly(BnA)), respectively, of high molecular weight (up to 690 kDa) and in moderate to good yields (see entries A, B, D and E In Table 1). EDA and BnDA are completely converted Into polymers (major fraction), and some dimeric (di-alkyl fumarate and maleate) and oligomeric byproducts. The byproducts are soluble In methanol and were separated from the polymer by precipitation of the polymer in MeOH followed by washing the polymer three times with MeOH, as described before (see e.g. Hetterscheld, D. G. H., et al,, J. Am. Chem. Soc. 2006, 128, 9746-9752 and Jellema, E, et al., J. Am. Chem. Soc. 2007, 129, 11631-11641.). Table 1 shows that catalyst precursor 2 gives higher yields than catalyst precursor 1 for both substrates (i.e. EDA and BnDA).

The bulky diazoester tBuDA was polymerized to poly(t-butyl 2-ylldone-acetate) (poly(tBuA)) in only low yields by both catalyst precursors 1 and 2 (Table 1, entries C and F). The conversion Is not complete (65% for 1 and 50% for 2) and unreacted tBuDA was recovered after the reaction.

Most of the reacted tBuDA was converted into oligomers (- 80%, M_{w} ∼ 1500 Da, PDI - 1.4) and a small amount of dimeric products, dht-butyl fumarate and maleate (- 15%). During the polymerization reaction the polymeric poly(tBuA) product precipitated from the reaction mixture in chloroform, which in part explains the low yields (and probably low molecular weights) obtained in these reactions.

The isolated white solid is insoluble In several solvents, such as chloroform (with and without trifluoroacetlc acid), dichloromethane, methanol, toluene and benzene. Due to its poor solubility, poly(tBuA) was analyzed by solid state state IR spectroscopy. The solubility behavior of poly(tBuA) contrasts markedly with the polymer obtained by radical polymerization of dl-t-butyl fumarate, which results In an atactic, but otherwise chemically equivalent polymer, Atactic poly(di-t-butyl fumarate) dissolves in several solvents (benzene, toluene, carbon tetrachloride and tetrahydrofuran). This clearly reveals that the obtained poly(tBuA) has very different properties than atactic poly(di-t-butyl fumarate), suggesting that like poly(EA) and poly(BnA), poly(tBuA) Is also syndiotactic. However, it is not quite clear why exactly this leads to a poor solubility in case of poly( t BuA).

From these substrate screening experiments It Is clear that EDA and BnDA can be polymerized in reasonable to good yields, leading to high molecular weight polymers. Homopolymerization of tBuDA is much less successful.

Catalyst precursor 2 performs generally better than catalyst 1, giving higher yields and longer polymers in case of polymerization of EDA and BnDA.

Increasing the steric bulk on going from EDA via BnDA to tBuDA leads to lower polymer yields.

With catalyst 1, J polymerization of BnDA also leads to shorter polymers than polymerization of EDA, suggesting that the propagation steps in case of BnDA are slower, possibly decreasing the propagation/termination rate ratio, which might thus explain the lower yields. Remarkably, however, this seems not to be the case with catalyst precursor 2, which gives similar polymer lengths for EDA and BnDA.

### Comparative example G: Homopolymerization of diazomethane.

Homopolymerizations of diazomethane were performed by adding an ice cold solution of diazomethane to a solution of catalyst precursor (1 or 2) in dichloromethane. The ratio of diazomethene/catalyst varied between 10 and 100. The mixture was stirred in ice for 1h and then slowly warmed up to room temperature, where it was further stirred for up to 16h. The polymer was obtained by evaporation of the solvent and subsequent precipitation with methanol. After washing with methanol and drying, a white solid was obtained.

Carbenes from diazomethane were homopolymerized to linear polymethylene in low yields (< 5%) by both catalyst precursors 1 and 2. The polymer yields of the reaction In ether were higher than in DCM but in both cases most of the diazomethane is converted to low molecular weight oligomers (Mw - 200 Da) and the dimer, ethylene. Due to the lack of stabilizing side groups, polymethylene undergoes rapid β-hydrogen elimination, which at least partly explains the rather low yields and the solvent effect.

The isolated white solid is Insoluble in several solvents, such as chloroform (with and without trifluoroacetic acid), dichloromethane, methanol, toluene and benzene at room temperature. Due to Its poor solubility, polymethylene was analyzed by solid state lR spectroscopy and by NMR spectroscopy at high temperatures (120°C),

### Examples 1-13: Copolymerization of Carbenes from Diazoesters.

Again catalyst precursors 1 and 2 were used for the copolymerization of carbenes from ethyl diazoacetate (EDA), benzyl diazoacetate (BnDA) and t-butyl diazoacetate (tBuDA) diazo acetate (Fig. 2).

Random copolymerization was performed by adding a mixture of equivalent molar amounts of a first monomer selected from EDA, BnDA and tBuDA (monomer A) and a second monomer, different from the first and selected from EDA, BnDA and tBuDA (monomer B) to a solution of the catalyst in chloroform, yielding a random copolymer, referred to as poly(A-ran-B). In this particular example the random copolymerizations are performed by adding a mixture of selected diazoesters comprising 1 mmol of a first diazoester and 1 mmol of a second diazoester (i.e. a total of 2 mmol dlazoester) to a solution of 0.04 mmol of catalyst (1 or 2) In 5 mL of chloroform (solvent). The reaction time of the polymerization reaction is 14 hours. The random copolymers obtained by 1 ; 1 random copolymerization of EDA and BnDA are slightly enriched in the EA component (Table 2, entries 1 and 7). Random copolymers obtained from 1 : 1 mixtures of EDA and tBuDA or BnDA and tBuDA are strongly depleted in the tBuA component (Table 2, entries 2, 3, 8 and 9). These compositions thus suggest that EDA is somewhat more reactive In the polymerization than BnDA and tBuDA is much less reactive than EDA or BnDA.

**Table 1. Homopolymerization of EDA, BnDA, tBuDA and DM with catalyst precursors 1 and 2**

| entry | catalyst precursor | substrate | polymer yield (%)^{a} | Mw (kDa) ^{b} | PDI^{b} |
|---|---|---|---|---|---|
| A | 1 | EDA | so | 150 | 3.6 ' |
| B | 1 | BnDA | 20 | 80 | 6.3 |
| C | 1 | tBuDA | <5 | n.d. | n.d. |
| D | 2 | EDA | 80 | 670 | 3.3 |
| E | 2 | BnDA | 50 | 690 | 2.7 |
| F | 2 | tBuDA | <5 | n.d. | n.d. |
| G | 1 / 2 | DM | <5 | n.d. | n.d. |

| | | | | | |
|---|---|---|---|---|---|
| a: Isolated by precipitation from and washing with methanol b; determined with size exclusion chromatography (SEC) calibrated against polystyrene samples In dichloromethane. Note 1: Poly(tBuA) could not be analyzed due to its poor solubility; note 2: PDI is polydispersity Index (M_{w}/Mₙ). | | | | | |

The difference in reactivities can be used to the benefit of making gradient block copolymers, referred to as poly(A-grad.B), because the higher reactivity of the first monomer compared to the second will enhance the gradient along the polymer chain.

Gradient block copolymers, poly(A-grad-B), were prepared by reacting the catalyst precursor (i.e. a solution of 0.04 mmol catalyst precursor 1 or 2 In 5 mL of chloroform) with 1.2 mmol of the first monomer (A) for 10-60 minutes before adding 2 mmol of the second monomer (B) (see the scheme in Fig. 3). Again the total reaction time was 14 hours. In this way we expected the formation of a polymer with a homoblock of the first monomer (A) followed by a block which becomes gradually richer in the second monomer (B).

With catalyst precursor 2, homo- and random (co)polymers were obtained in somewhat higher yields than such gradient block copolymers. All obtained polymers show monomodal distributions In their size exclusion chromatograms.

Although carbenes from tBuDA are homopolymerized in only low yields (probably due to the steric demand of the t-butyl group), they were incorporated in decent amounts after initiating the reaction with EDA or BnDA. However, propagation from tBuDA monomers seems to be slow compared to propagation from EDA, and hence termination occurs before the reaction has completed leading to low overall yields and low tBu-ester incorporation (see e.g. entry 5 and 12 of Table 2). The low amount of tBuA-groups in the formed block after addition of tBuDA are presumably randomly distributed.

Overall, using Rh^{l} complex 2 produces the copolymers in higher yields and with higher molecular weights than complex 1. This was also observed for the homopolymerization reactions (Table 1).

### Examples 14-15_{:} Copolymerization of Carbenes from Diazomethane and a diazoester.

Again catalyst precursors 1 and 2 were used for the copolymerization of carbenes from diazomethane (DM), ethyl diazoacetate (EDA) and benzyl diazoacetate (BnDA) (Fig. 2). Copolymerization was performed by adding a mixture of an Ice cold solution of diazomethane (monomer A) and a second monomer, selected from EDA and BnDA (monomer B) to a solution of the catalyst in dichloromethane In various ratios. The mixture was stirred on ice for 1 h and then slowly warmed up to room temperature, where it was stirred for up to 16h, yielding a copolymer. By varying the ratio between the two monomers the amount of polar functionalities in the polymer chain can be tuned, which is reflected in the polymer properties like solubility in common laboratory solvents and thermal behavior. If slow addition of diazomethane is desired, the above-described procedure Is modified slightly. In this case, an ice cold solution of diazomethane is added to a mixture of ethyl diazoacetate (EDA) or benzyl diazoacetate (BnDA) and the catalyst in DCM via ice cooled syringe pump addition over a defined period. Random copolymers of diazomethane and the diazoesters EDA or BnDa prepared with this syringe pump method were obtained in overall higher yields (up to - 30%) than the homo-polymerization of diazomethane.

**Table 2. Copolymerization of EDA, BnDA and tBuDA with catalyst precursors 1 and 2**

| entry | Catalyst precursor | Monomer A | Monomer B | Feed ratio (mmol A : mmol B) | Composition of copolymer^{c} | Polymer yield (%)^{a} | M_{W} (kDa)^{b} | PDI^{b} |
|---|---|---|---|---|---|---|---|---|
| 1^{d} | 1 | EDA | BnDA | 1:1 | 1:0.8 | 30 | 80 | 2.8 |
| 2^{d} | 1 | EDA | tBuDA | 1:1 | 1:0.3 | 20 | 100 | 4.3 |
| 3^{d} | 1 | BnDA | tBuDA | 1:1 | 1 :0.5 | 5 | 60 | 2.4 |
| 4^{e} | 1 | EDA | BnDA | 1.2:2 | 1:1 | 30 | 70 | 3.6 |
| 5^{e} | 1 | EDA | tBuDA | 1.2:2 | 1:0.2 | 10 | 110 | 4.5 |
| 6^{e} | 1 | BnDA | tBuDA | 1.2: 2 | 1:0.2 | 5 | 70 | 3.8 |
| 7^{d} | 2 | EDA | BnDA | 1:1 | 1:0.8 | 60 | 430 | 4.4 |
| 8^{d} | 2 | EDA | tBuDA | 1:1 | 1:0.3 | 30 | 330 | 3.8 |
| 9^{d} | 2 | BnDA | tBuDA | 1:1 | 1:0.3 | 30 | 100 | 3.7 |
| 10^{e} | 2 | EDA | BnDA | 1.2: 2 | 1:1.4 | 45 | 350 | 2.4 |
| 11^{e,f} | 2 | EDA | BnDA | 2:2 | 1:0.5 | 30 | 720 | 4.2 |
| 12^{e} | 2 | EDA | tBuDA | 1.2:2 | 1:0.2 | 10 | 380 | 4.1 |
| 13^{e} | 2 | BnDA | tBuDA | 1.2:2 | 1:0.1 | 20 | 120 | 3.9 |
| 14 | 1/2 | DM | EDA | 5: 1 | ^{g} | up to ∼ 30% | 82 | 10.2 |
| 15 | 1/2 | DM | BnDA | 5 : 1 | ^{g} | up to ∼ 30% | 68 | 7.1 |

| | | | | | | | | |
|---|---|---|---|---|---|---|---|---|
| a: Isolated by precipitation and washing with methanol. b: SEC analysis cellbrated against polystyrene samples. c: Estimated by ¹H NMR spectroscopy. d: random copolymer e: gradient block copolymer f. Reaction temperature: -20°C, the second monomer la added after 1 week. g: Samples are not completely homogeneous, likely due to macroscopic phase separation. | | | | | | | | |

The resulting copolymers were isolated as white solids and characterized by solid state IR and NMR In either CDCl₃ at room temperature or at higher temperatures in o-dlchlorobenzene-d4 depending on solubility. These analyses revealed that variation In monomer ratio combined with variation in way of addition leads to the synthesis of either random copolymers or copolymers with a blocky microstructure.

### Structural analysis ¹H and ¹³C NMR results

All polymers were dissolved in deuterated chloroform. Poly(tBuA) could not be dissolved. The NMR-spectra were measured at 298 K. The results of the ¹H NMR and ¹³C NMR are shown in Tables 3 and 4, respectively.

**Table 3. Tabulated ¹H NMR chemical shift range (δ in ppm, (peak top)) of (co)polymers of EDA, BnDA and tBuDA with numbering scheme as shown in Fig 2B.**

| Polymer | Freq. (MHz) | Proton | | | | | |
|---|---|---|---|---|---|---|---|
| | | I | II | III | IV | V | VI |
| poly(EA) | 500 | 3.1-3.3 (3.2) | 4.0-4.2 (4.1) | 1.1-1.3 (1.2) | - | - | - |
| poly(BnA) | 500 | 3.5-3.7 (3.6) | - | - | 4.5 - 5.0 (4.7) | 7.0-7.3 (7.1) | - |
| poly(EA-*ran*-BnA) | 500 | 3.2-3.7 (3.4) | 3.7 - 4.2 (3.9) | 0.8-1.4 (1.1) | 4.6 - 5.2 (4.9) | 7.0 - 7.6 (7.2) | - |
| poly(EA-ran-tBuA) | 400 | 3.0 - 3.3 (3.2) | 3.9 - 4.2 (4.1) | 1.1-1.3 (1.2) | - | - | 1.3-1.6 (1.4) |
| poly(BnA-ran-tBuA) | 400 | 3.3 - 3.8 (3.6) | - | - | 4.6 - 6.2 (4.8) | 8.9 - 7.5 (7.1) | 1.0-1.5 (1.2) |
| poly(EA-grad-BnA)" | 500 | 3.1 - 3.2 (3.2), 3.2 -3.7 (3.6) | 3.6 - 4.0 (3.8), 4.0 - 4.1 (4.1) | 0.8 -1.1 (0.9), 1.1-1.3 (1.2) | 4.6 - 5.1 (4.8) | 6.9 - 7.4 (7.1) | - |
| poly(EA-gred-tSuA) | 500 | 3.1-3.2 (3.2) | 3.9 - 4.2 (4.1) | 1.1-1.3 (1.2) | - | - | 1.3 - 9.8 (1.4) |
| poly(BnA-grad-tBuA) | 400 | 3.5 - 3.7 (3.6) | | - | 4.5-5.0 (4.7) | 6.9-7.5 (7.1) | 1.0-1.6 (1.2. 1.3) |
| polymethylene | 300 | 1.2 - 1.4 | | - | - | - | - |
| Poly(DM-EA) | 300 | 1.2-1.4, 1.6-1.8, 2.0-2.2, 3.1 - 3.3 | 4.0-4.2 | 1.1-1.3 | - | - | - |
| Poly(DM-BnA) | 300 | 1.2-1.4, 1.6-2.2, 3.5-3.7 | - | | 4.5 - 5.0 | 7.0 - 7.3 | - |

| | | | | | | | |
|---|---|---|---|---|---|---|---|
| h: Mixture of poly(EA) and poly(EA-grad- BnA). | | | | | | | |

**Table 4. Tabulated ¹³C NMR chemical shift values (δ In ppm) of (co)polymers of EDA, BnDA and tBuDA with numbering scheme as shown in Fig. 2C**

| **Polymer** | **Freq. (MHz)** | **Carbon atom** | | | | | | | |
|---|---|---|---|---|---|---|---|---|---|
| | | **a** | **b** | **c** | **d** | **e** | **f** | **g** | **h** |
| poly(EA) | 125 | 45 | 171 | 61 | 14 | - | - | - | - |
| poly(BnA) | 125 | 45 | 171 | - | - | 67 | 135, 128, 127 | - | - |
| poly(EA-ran-BnA) | 125 | 45 | 171 | 61 | 14 | 67 | 136, 128, 127 | - | - |
| poly(EA-ran-tBuA) | 100 | 45 | 171 | 60 | 14 | - | - | 81 | 28 |
| poly(BnA-ran-tBuA) | 100 | h | 171 | - | - | 67 | 138, 128, 127 | j | 28 |
| poly(EA-grad-SnA)ⁱ | 125 | 45 | 171 | 61 | 14 | 67 | 136, 128, 127 | - | - |
| poly(EA-grad-tBuA) | 125 | 45 | 171 | 61 | 14 | - | - | 81 | 28 |
| poly(BnA-grad-tBuA) | 100 | h | 171 | - | - | - | 136, 128, 127 | j | 28 |
| Poly(DM-EA) | 75 | 30, 45 | 171 | 61 | 14 | - | - | - | - |
| poly(DM-BnA) | 75 | 30, 45 | 171 | - | - | 67 | 136,128.127 | - | - |

| | | | | | | | | | |
|---|---|---|---|---|---|---|---|---|---|
| i: Mixture of poly(EA) and poly(EA-grad- BnA). j: Resonance not observed. | | | | | | | | | |

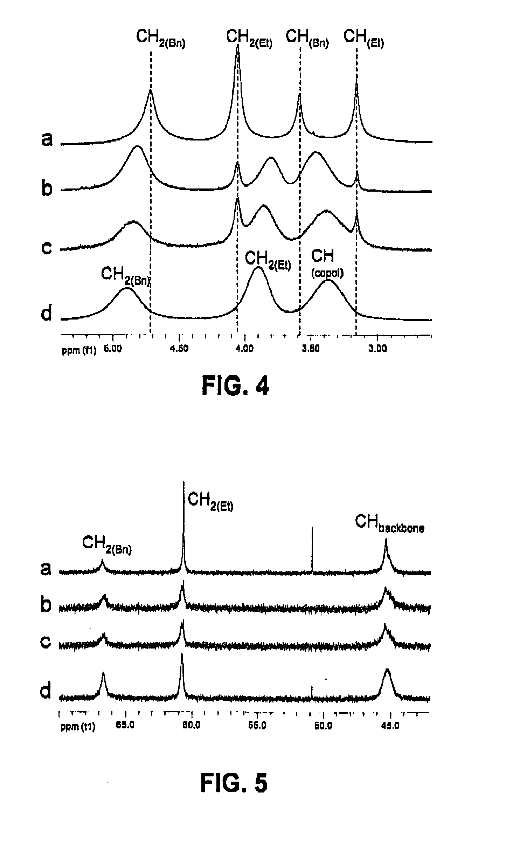

¹³C NMR spectroscopy shows one relatively sharp signal for the equivalent polymer backbone carbons as well as for the equivalent ester carbonyl carbons for all polymers. The chemical shifts for the carbonyl (171 ppm) and backbone carbon (45 ppm) atoms are similar to the ones reported for stereoregular poly(ethyl 2-ylldene-acetate), see e.g. Hetterscheid, D. G. H., et al., J. Am. Chem. Soc. 2006, 128, 9748-9752 and Jellema, E. et al., J. Am. Chem. Soc. 2007, 129, 11631-11641. Therefore, these polymers must all be highly syndiotactic. Furthermore, ¹H NMR spectroscopy confirms the presence of copolymers In the products of the copolymerization reactions. Homopolymers of tBuDA can be synthesized In only very low yield and are not soluble in chloroform, while the t-butyl group is clearly observed In the NMR spectra of the copolymers. For the copolymers from EDA and BnDA clearly different chemical shifts are observed than for the homopolymers in the ¹H NMR spectra (Table 3). In Fig. 4 part of the ¹H NMR spectra of poly(EA-ran-OnA) (d), poly(EA-grad-BnA) (b and c) (prepared with Rh^{l} complex 2) and a mixture of the homopolymers poly(EA) and poly(BnA) (a) are shown.

The spectra of the gradient copolymer (Fig. 4b and c) reveal the presence of a small amount of homopolymer poly(EA) at ð 4.08 and 6 3.18 ppm, probably formed and terminated in the beginning of the reaction before addition of BnDA.

The peaks of homopolymer poly(EA) are also visible in the ¹³C NMR spectra of the gradient copolymer. In Fig. 5a-d part of the ¹³C NMR spectra of poly(EA-ran-BnA) (d), poly(EA-grad-BnA) (b and c) and a mixture of the homopolymers poly(EA) and poly(BnA) (a) are shown. The resonances for the copolymers are somewhat broader than for the homopolymers. In the spectra of the gradient copolymers the homo-poly(EA) can be distinguished by the sharper peak tops at δ 45.3 and δ 60.7 ppm (Fig. 5b and c).

In the ¹H NMR spectra, the backbone protons of poly(BnA) (δ 3.6 ppm) resonate at a markedly downfield shifted position compared to the same protons in poly(EA) (δ 3.18 ppm) (Fig. 4 a), even though the ¹³C NMR signals of these polymers reveal similar chemical shifts for the backbone and carbonyl carbon atoms (see Table 4). The difference between the signals for the backbone CH signals as well as the O-CH₂ signals for the different homopolymers is almost 0.5 ppm In the ¹H NMR spectra. In a random copolymer with ethyl and benzyl ester groups, the backbone CH signals of both repeating units shift towards each other (Fig. 4 d). The backbone protons shift downfield on going from homo-poly(EA) via co-poly(EA-BnA) to homo-poly(BnA), whereas the O-CH₂-R signals shift upfield with an increasing amount of BnA.

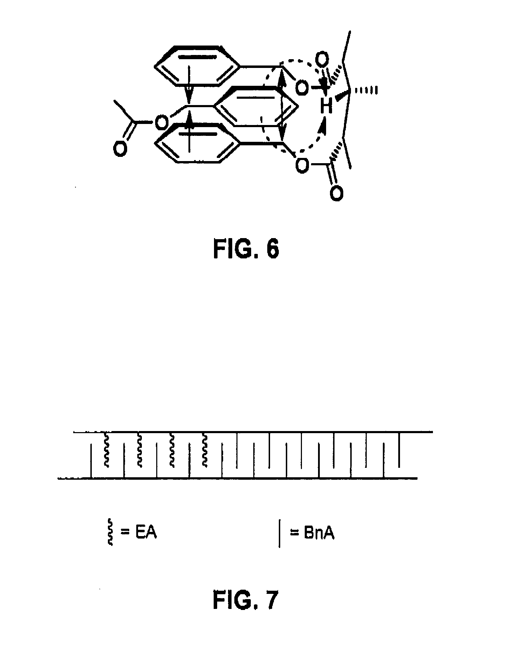

The deshielding (as indicated with the dashed arrows in Fig. 6) of the backbone CH and shielding of the -O-CH₂-R protons (as indicated with the solid arrows in Fig. 6) can be explained by inter- or intra-chain interactions of the aromatic rings of the benzyl groups involving π-π-stacking of the aromatic rings (Fig. 6).

The effects are maximized in homopolymers of BnDA, and smaller In the copolymers. In poly(EA-grad-BnA) (Fig. 4 b and c) the first part of the polymer consists only of poly(EA) and the last part of the polymer consists mainly of poly(BnA). Therefore, the effect of the π-π-stacking on the -O-CH₂-∅ ¹H NMR chemical shifts is smaller than in the random copolymer. Remarkably, all -O-CH₂-CH₃ functionalities in the copolymers are upfleld shifted, to roughly the same extent for the random and the gradient copolymers. Since no large amount of pure homo-poly(EA) is obtained, the EA-moieties of the poly(EA)-homoblock tails in the gradient polymer apparently resonate at the same frequency as the randomly distributed EA-moieties in the random polymer, while the EA-moieties of both these copolymers resonate at a clearly different position than those In poly(EA) homopolymer. To explain these observations, we propose the intercalation of the poly(EA) homoblock tails with the BnA moieties in the poly(EA-grad-BnA) copolymers leading to the upfield shift of the homo-EA block In poly(EA-grad-BnA). Hence, on average all EA-moieties of the gradient block copolymer are influenced by these interactions (Fig. 7).

¹H NMR clearly shows sharp signals for proton I of the -CH₂- functionality in the homopolymers of diazomethane. End group signals are observed as -CH₃ signals at δ 0.9 ppm and in some cases as -CH=CH₂ signals at δ 4.8 and 5.8 ppm, indicating termination via β-hydrogen elimination.

The ¹H NMR and ¹³C NMR spectra of all copolymers from diazomethane and diazoesters show resonances indicative for homo-blocks of -[CH₂]ₙ- and homo-blocks of - [CH(ester)]ₙ- moieties. The copolymers prepared with the syringe pump method show additional ¹H NMR resonances at δ 1.6-2.2 ppm, indicative for random incorporation of - CH₂- moieties In between -[CH(ester)]- moleties.

### Differential Scanning Calorimetry.

Results of differential scanning calorimetric (DSC) measurements of comparative example A and examples 6-10 and 12 are shown in Table 5. Where the homo- and gradient block copolymers are semi-crystalline (showing both Tg and Tc and Tm), the random copolymers are completely amorphous (showing only Tg). These data provide additional evidence (besides the previously presented structural NMR data) for the different structure of the random and gradient copolymers. The observed transitions for the copolymers with benzyl and ethyl ester groups were found at temperatures between the transitions of poly(EA) and poly(BnA). A mixture of poly(EA) and poly(BnA) showed transitions at similar temperatures as the homo-polymers (entry I, comparative example). However, for this mixture, only one glass transition was found.

Samples of copolymers containing tBuA-groups were heated to 180°C in the first cycle(s) to prevent decomposition by iso-butene loss. However, for poly(BnA-grad-tBuA) no crystallization or melting transitions were found. After heating to 210°C, T_{c} and Tₘ transitions were observed (entry 6), but presumably, the polymer was partially decomposed.

### Thermo Gravimetric Analysis.

All (co)polymers were subjected to themogravimetric analysis. Polymers containing ethyl and/or benzyl ester moieties decompose above 300 °C. For these copolymers no stabilizing or destabilizing effects were observed: the degradation curves of the copolymers lie between those of the corresponding homopolymers. The atactic analogue of poly(EA), prepared from EDA with Pd-based catalysts by Ihara *et* al., showed a much lower decomposition temperature: at 183°C, 10% of the atactic polymer is decomposed.

The decomposition of poly(tBuA) differs from the decomposition of poly(di-t-butyl fumarate) reported in the literature. Poly(di-t-butyl fumarate) starts to decompose around 200°C and forms poly(fumaric acid) in one step. However, poly(tBuA) arrives to the approximately 50% weight decrease (corresponding to quantitative loss of isobutene) In two steps. It is not clear whether this behavior is caused by higher tacticity of poly(tBuA) compared to poly(di-t-butyl fumarate). The subsequent smoother step to 43% of the weight could be due to anhydride formation.

The degradation curve of poly(EA-grad-tBuA) (entry 12, Table 5) shows stepwise degradation, starting at 240°C. The weight loss in the first step corresponds with loss of i-butene from the t-butyl groups, which was expected to result in formation of carboxylic acid groups. Since this is potentially interesting for the formation of amphiphilic polymers, the thermolysis was carried out on a preparative scale.

**Table 5. Thermal properties of (co)polymers determined by differential scanning calorimetry^{k}**

| Entry | Polymer | Mw | PDI | Tg (ºC) | Tc (°C) | Tm (ºC) | ÅH |
|---|---|---|---|---|---|---|---|
| | | (kDa) | | | | | (J/g) |
| A | poly(EA) | 150 | 3.6 | 22^{l} | 80 | 105 | 20 |
| H | poly(BnA) | 370 | 2.4 | 52 | 154 | 181 | 20 |
| I | poly(EA) + poly(BnA) | 150:370 | 3.6:2.4 | 50^{m} | 84;161 | 117; 161 | 2; 10 |
| 6 | poly(BnA-grad-tBuA) | 70 | 3.8 | 49 | 163^{l} | 165ⁿ | 1.5 |
| 7 | poly(EA-*ran*-BnA) | 430 | 4.4 | 44 | - | - | - |
| 8 | poly(EA-ran-tBuA) | 330 | 3.8 | 51 | - | - | - |
| 9 | poly(BnA-ran-tBuA) | 100 | 3.7 | 62 | - | - | - |
| 10 | poly(EA-*grad*-BnA) | 350 | 2.4 | 46 | 91 | 120 | 1 |
| 12 | poly(EA-grad-tBuA) | 380 | 4.1 | - | 89 | 113 | 3 |

| | | | | | | | |
|---|---|---|---|---|---|---|---|
| k : General; DSC: heating rate: 1ºC/min, Tₘ and T_{c} were determined from the heat flow curves, while T_{g} was derived from the reversing heat flow curves (1 °C/min); l : Determined from a cooling scan with 2°C/mln modulated; m: Only one T_{g} was observed; n: Found after partial decomposition of the polymer due to heating to 210°C. | | | | | | | |

## Claims

1. A copolymer having the general formula:
(CHR¹)ₙ Formula 1
wherein the copolymer comprises a chain of n carbon atoms, each carbon atom bearing a R¹ group, each R¹ group being independently selected from the group consisting of:
-H and hydrocarbyl-groups having between 1 and 50 carbon atoms and optionally one or more hetero atoms, and wherein the copolymer comprises at least two different R¹ groups, and wherein n is an integer ranging from 50 to 1000000.

2. A copolymer having a main chain of n carbon atoms comprising at least one section having the general formula:
(CHR²)ₚ(CHR³)_{q} Formula 2
wherein R² and R³ are different and Independently of one another selected from the group consisting of;
-H and hydrocarbyl-groups having between 1 and 50 carbon atoms and optionally one or more hetero atoms
wherein
- n is an integer ranging from 50 to 1000000;
- p and q are integers which are independent of one another and range from 1 to 100000.

3. The copolymer according to any one of claims 1 and 2, wherein the hydrocarbyl-groups are selected from the group consisting of alkanes, vinyls (alkenes), aryls (aromatic functionalities), ketones, ethers, amines, esters and amides

4. The copolymer according to any one of claims 1-3, wherein the hydrocarbyl-groups comprise esters having the general structure -C(=O)-O-R⁴, wherein the R⁴-groups comprise hydrocarbyl-groups having between 1 and 20 carbon atoms.

5. The copolymer according to claim 4, wherein R⁴ comprises linear or branched aliphatic hydrocarbyl groups optionally substituted with hetero atoms or aromatic hydrocarbyl groups.

6. The copolymer according to any one of the claims 4-5, wherein R⁴ is selected from the group consisting of: ethyl (-C₂H₆) , t-butyl (-C(CH₃)₃) and benzyl (-CH₂-Ø).

7. The copolymer according to any one of the previous claims, wherein the copolymer is a random copolymer, a statistical copolymer, a block copolymer or a gradient block copolymer.

8. The copolymer according to any one of the previous claims, wherein the copolymer is syndiotactic

9. The copolymer according to claim 1, wherein a first fraction of the R¹-groups comprises -H and a second fraction of the R¹-groups comprises -C(=O)-O-R⁴, wherein the R⁴-groups comprise hydrocarbyl-groups having between 1 and 20 carbon atoms..

10. The copolymer according to claim 1, wherein the copolymer comprises two different R¹ groups selected from ethyl acetate (-C(=O)-O-C₂H₆), t-butyl acetate (-C(=O)-O-C(CH₃)₃) and benzyl acetate (-C(=O)-O-CH₂-∅.

11. A method for preparing a copolymer according to any one of claims 1-10, the method comprising the sequential steps of:
a) providing a first monomer and a second monomer, both monomers having the general formula N₂=CH-R⁵, wherein R⁵ is selected from the group consisting of: H and hydrocarbyl-groups having between 1 and 50 carbon atoms and optionally one or more hetero atoms;
b) providing a Rh-complex catalyst solution;
c) mixing the first monomer and the Rh-complex catalyst solution;
d) stirring the obtained mixture and allowing the first monomer to react at least partially;
e) adding the second monomer to the obtained mixture;
f) stirring the obtained mixture and allowing the monomers to react; and
g) optionally isolating the obtained polymer.

12. The method according to claim 11 , wherein at least two monomers are selected from the group consisting of ethyl diazoacetate (EDA), t-butyl diazoacetate (tBuDA), benzyl diazoacetate (BnDA) and diazomethane (DM).

13. The method according to any one of claims 11 and 12, wherein the first monomer comprises a diazoester, and the second monomer comprises diazomethane (N₂=CH₂).

14. The method according to any one of claims 11-13, wherein step d) is carried out for 0 minutes, such that the first and the second monomer are simultaneously mixed with the Rh-complex catalyst solution.

15. The method according to any one of claims 11-14, wherein the catalyst is selected from the group consisting of ((L-prolinate)Rh^{l}(1,5-cyclooctadiene)] and [(L-prolinate)Rh^{l}(1,5-dimethyl-1,5-cyclooetadiene)].
